Europäisches Patentamt

European Patent Office

Office européen des brevets

(11) Publication number: **0 187 008**
**A2**

# (12) EUROPEAN PATENT APPLICATION

(21) Application number: **85309138.7**

(22) Date of filing: **16.12.85**

(51) Int. Cl.⁴: **C 21 C 5/00, C 21 C 5/32**

(30) Priority: **17.12.84 US 682106**

(43) Date of publication of application: **09.07.86**
**Bulletin 86/28**

(84) Designated Contracting States: **AT DE FR GB IT SE**

(71) Applicant: **Bergman, Donald George, 2364 Victoria Parkway, Hudson Ohio 44236 (US)**

(72) Inventor: **Bergman, Donald George, 2364 Victoria Parkway, Hudson Ohio 44236 (US)**

(74) Representative: **Jones, Colin et al, W.P. THOMPSON & CO. Coopers Building Church Street, Liverpool L1 3AB (GB)**

(54) Composition and method for producing a heat of steel.

㉗ A method of producing a heat of steel by a process which includes the step of charging a steel making furnace with a first quantity of scrap metal and a second quantity of hot metal, includes the step of introducing into the steel making furnace (i) a selected quantity of a polymeric material having a sulfur content less than about 0.1 and preferably less than about 0.01 percent by weight, and (ii) an effective amount of exothermic metallic material which reacts exothermically with oxygen thereby to reduce the quantity of hot metal required to produce a heat of steel in the absence of the exothermic metallic material.

## BACKGROUND OF THE INVENTION

The present invention relates to a composition useful in the steel making process and other high temperature oxidation-reduction environments, and in particular to a supplemental solid fuel system for the steel industry which economically reduces hot metal requirements in and undesirable gaseous emissions from the basic oxygen process (B.O.P.) and similar vessels.

It is common practice to produce a heat of steel in a B.O.P. vessel by charging the furnace with both solid scrap and a quantity of hot metal. Because the hot metal charge from the blast furnace is substantially more expensive per ton than the scrap metal portion of the charge, it is desirable to reduce the percentage of the former while increasing the percentage of the latter. However, additional fuel must be added to the charge if scrap metal is to be added in place of some of the hot metal charge. It is possible to charge about 2400 pounds of anthracite coal as a supplemental fuel source, allowing about 4000 to 6000 pounds of scrap metal to be substituted for hot metal in the charge. However, this technique is limited because the coal fuel source contains sulfur which must be minimized in the charge.

It would be highly advantageous to have a technique which could economically permit higher percentages of scrap metal to be charged in the steel making process. It would also be advantageous if such technique were useful in low carbon steel applications and was not limited in its application by sulfur content.

In addition, recently certain types of polymeric materials have been used in some types of B.O.P. furnaces as a means of reducing the amount of hot metal required in a given heat. However, this type of material does not produce desirable results in certain types of furnaces such as the suppressed combustion type B.O.P. furnaces.

Accordingly, it is an object of the present invention to provide a system and means of utilizing polymeric materials in combination with various exothermic materials in all types of basic oxygen furnaces as a means of increasing the reduction in the amount of hot metal required in a given heat of steel.

## SUMMARY OF THE INVENTION

The present invention relates to an improved method of producing a heat of steel by a process which includes the step of charging a steel making furnace with a first quantity of scrap metal and a second quantity of hot metal wherein the improvement comprises the step of introducing into the steel making furnace (i) a selected quantity of polymeric material having a silfur content less than about 0.1 weight percent, and (ii) an effective amount of a metallic material which reacts exothermically with oxygen to thereby reduce the quantity of hot metal required to produce a heat of steel relative to the amount of hot metal required in the absence of the metallic material.

The selected polymeric compositions may be premanufactured, that is pre-polymerized to final molecular structure, before further processing or compounding. The polymeric compositions may also be formed in situ from monomers and/or pre-polymers compounded into the compositions used within the scope of this invention.

0187008

The polymeric compositions include homopolymers, mixtures of polymers, inter-polymers, and polymers compounded with non-polymeric ingredients. Some preferred examples of the above include the following: homopolymer - polyethylene, polypropylene, polystyrene, polyester, polybutylene, polycarbonate; mixture of polymers - polyethylene/polyethylene terphthalate (1:1 parts by weight); interpolymer -acrylonitrile/butadiene/styrene; polymer compounded with non-polymeric ingredients - polyethylene/lime/calcium stearate (59.5:40.0:0.5) parts by weight), acrylonitrile/butadiene/styrene/ polyethylene/polyethyleneterephthalate/burnt dolomite/mill scale (10:30:12:9:39 parts by weight), nonyl phenol/formaldehyde/melamine/lime/fluorspar/ mill scale/flue dust (11:4:7:20:8:25:25 parts by weight).

Although not limiting to the scope of the invention, the following materials are precursor materials which may be used in producing polymers, copolymers or interpolymers, through either addition or condensation process, which are suitable for use in the present invention: acrylonitriles, 1,3-butadiene, tert-butylethylene, diallyl phthalate, di-n-butyl, maleate, acrylonitrile/butadiene/styrenes, acetals, acetylenes, acrylics, alkyds, allyl esters, allyl alcohol, amine/aldehydes, cellulosic esters, cellulosic ethers, ethers, epoxides, isoprene, maleic anhydride, methacrylic acid, furans, amides, phenol/aldehydes, amine/phenol/aldehydes, phenylene oxides, imides, butylenes, phenylenes, carbonates, diactyl fumarate, diethyl fumarate, di-2-ethylhexyl maleate, arylate ethers, arylate esters, saturated esters, unsaturated esters, ethylenes, propylenes, pentenes, methyl pentenes, 1-hesane, 1-hesyne, indene, isobutylene, styrenes, styrene/butadienes, 2,5-dimethylstyrene, m-divinylbenzene, carboxylic acids, carboxylic anhydrides, urethanes, vinyl chlorides, vinyl alcohols, vinyl acetates, vinyl n-butyrate, vinylcyclohexene, vinyl carbonates, vinyl formates, styrene/carboxylic anhydrides, isoprenes, cyclopentadienes, succinic, glutaric, adipic, sebacic, dodecarnedioic, maleic, funaric, ethylenediamine, 1,2-propanediamine, 1,3-prepanediamine, 1,4-butanediamine, 1,6-hexanediamine, piperazine, ethylene glycol, trimethylene glycol, 1,4-butanediol, 1,6-hexanediol, 1,12 dodecanediol, propylene glycol, 1,3-butanediol, neopentyl glycol, diethylene glycol, triethylene glycol, tetraethylene glycol, dipropylene glycol, cis-1,4-cyclohexanediol, trans-1,4-cydohexanediol, mixed 1,4-cyclohexanediols, m-xylenediol, p-xylenediol, bischloroformates (CICOOROCOCI with R Group of $(CH_2)2$, $(CH_2)4$, trans-1,4-cyclohexyl and cis-1,4-cyclohexyl), glycolic, lactic, butyrics, valerics, caproics, salicylic, 3-phenylacetic, 4-phenylacetic, glycolide, lactide, lactones, tolylene diisocyanate, m-xylylene diisocyanate, p-xylylene diiosocyanate, 1,2-diisocyanatoethane, hexamethylene diisocyanate, terephthalic acid, isophthalic acid, ethyl and methyl of monoesters,, ethyl and methyl of diesters, trephthaloyl chloride, phthaloyl chloride, 2,6-naphthalenedicarboxylic acid, phenylenediamines, 4,4-methylenediamine, phenols, alkylated phenols with R Groups up to C=12, bisphenols A, C, and F, resorcinol, hydroquinone, 4,4-bisphenol, formaldehyde, acetaldehyde, propionaldehyde, n-butyraldehyde, isobutyraldehyde, n-valeraldehyde, pyromellitic dianhydride, naphthalene-1,4,5,8-tetracarboxylic diahydride and diethylenetriamine.

Polymeric or interpolymeric materials useful in the practice of the present invention generally have a chemical composition of $-[C\,H_xO_yN_z]_n{}^-$, where n is preferably greater than 10, and where sulfur, phosphorus and halogen content is exceptionally low or nonexistent. Materials selected for use as supplemental fuel source preferably have a relatively high hydrogen content, e.g., greater than 4 weight percent, and relatively low oxygen and nitrogen contents, e.g., y is between 0 and 3 and z is between 0. and 2. Materials selected for use principally as binders or carriers generally can have lower hydrogen contents and relatively higher oxygen and nitrogen contents to improve wetting characteristics with the material to be bound and reduce the amount of polymer required in a given application.

The exothermic metallic material used in the practice of the instant invention is a material which generally is not added to a heat of steel for its exothermic properties, but one which together with the selected polymeric material produces unexpected results. That is, the exothermic metallic material is one which when used with the selected polymeric material reduces the amount of hot metal required more than the reduction which results from the use of the polymeric material alone, the use of exothermic material alone, or the sum of the reduction produced by the use of the polymeric material alone and the exothermic material alone.

Typical of such exothermic metallic materials are (1) aluminum, silicon, magnesium, titanium, vanadium, rare earths, calcium, sodium, columbium, and other metals which have a heat of oxidation higher than iron and (2) compounds of the foregoing, including magnesium silicon, calcium silicon, calcium carbide, silicon carbide, and the like, which have a heat of oxidation greater than that of iron.

Good results are obtained when the exothermic metallic material is aluminum, magnesium, magnesium silicons, and other metals or compounds which produce compounds not injurious to the furnace refractory lining, environmental systems or desired heat chemistry.

Best heat producing or fuel efficiency results are obtained when the exothermic metallic material is aluminum, magnesium, calcium, titanium, or compounds of the foregoing which have a heat of oxidation greater than that of iron. Such metallic materials can be employed alone or as mixtures thereof.

The present invention can be used as a supplemental fuel source in the steel making process and results in an economical increase in the amount of scrap metal which may be charged into a B.O.P. vessel, without being limited by sulfur content, low carbon requirements of the heat being produced, or environmental concerns.

## DESCRIPTION OF THE PREFERRED
## PRACTICE OF THE INVENTION

The present invention provides an improvement in the method of producing a heat of steel by a process which includes the step of charging a steel making furnace with a first quantity of scrap metal and a second quantity of hot metal. Specifically, the improvement in this method comprises the step of introducing into the so-charged steel making furnace (i) a selected quantity of a polymeric material having a

0187008

sulfur content less than about .01 weight percent, and (ii) an effective amount of metallic material which reacts exothermically with oxygen to thereby reduce the quantity of hot metal required to produce a heat of steel in the absence of the metallic containing material.

In a common B.O.P. steel making operation, the furnace is charged with large volumes of scrap metal and hot metal, positioned for introduction of an oxygen lance, oxygen injection and ignition is initiated and shortly thereafter a flux charge is introduced into the furnace. The oxygen injection cycle is continued for a predetermined period of time to remove silicon, carbon and other metalloids from the molten metal and convert it into steel of the desired grade. When within specification, the metal is transferred into a tapping ladle and necessary additives are introduced to complete the chemistry of the desired grade of steel.

For reasons of economy, it is desirable to increase the amount of scrap metal introduced into the furnace relative to the amount of hot metal utilized. Generally, a supplemental source of fuel is introduced into the heat, e.g., during the flux charge, to permit a substitution of greater amounts of scrap metal for hot metal. Commonly, substantial quantities of anthracite coal are used as a supplemental fuel source, it being determined that introduction of about 2400 pounds of supplemental anthracite coal permits the substitution of about 4000 to 6000 pounds of scrap metal for hot metal in a given nominal 200 ton heat. However, this technique is limited because coal generally contains sulfur in quantities which restricts the amount of supplemental coal which can be introduced consistent with the chemical requirements of the steel. The technique also increases the probability of generating potentially explosive concentrations of CO gas during the initial stage of oxygen injection. Generally, when coal is utilized as the supplemental fuel, it is introduced by one of two possible methods. In a first method, the vessel is charged with scrap and hot metal. During the charging of hot metal, the scrap charging bucket is removed and lowered to the vessel deck and the pallet(s) of coal are placed on the lip of the charging bucket. The charging bucket then returns to the mouth of the vessel and is tilted in typical charging fashion, introducing the coal. The vessel is then righted to injection position and oxygen injection commences. This procedure involves a time delay, on the order of one to two minutes, as the vessel cannot be immediately injected until the coal is introduced. In the second method the coal is introduced from one of the overhead flux bins. This has again been done, generally, prior to oxygen injection. There is little time penalty in the procedure but there exists the possiblity, as has happened, of dust explosion.

According to the present invention, the need to use coal as a supplemental fuel source to increase the scrap metal charge is reduced or eliminated, by the use of the combination of a polymeric material and the selected exothermic metallic material. Increased amounts of scrap metal may be substituted for hot metal as a result of the practice of the present invention, sulfur related limitations are eliminated, material handling problems are substantially reduced. This is accomplished by reducing both volume and weight of supplemental fuel required per heat - thus to be kept on hand. Additionally, the present invention provides no handling and/or storage problems as it is non-friable, hydrophobic and a solid, as opposed to a granular, or dust producing product. Also, environmental problems associated with stack emissions are reduced. The invention involves the introduction into the steel making furnace at selected times, either before or after oxygen injection is initiated, of a selected solid polymeric material combined with a selected amount of the desired exothermic metallic materials, either alone or in combination with other materials, to serve as a supplemental solid fuel in the steel making process.

In one embodiment of the invention, the selected solid polymeric material combined with selected exothermic metallic material is introduced into the B.O.P. vessel as a part of the flux charge shortly after the oxygen injection cycle begins. In an alternative procedure, the selected solid polymeric material combined with selected exothermic metallic material may be introduced into the B.O.P. vessel from the scrap chute after the hot metal charge was introduced but before the oxygen injection cycle began. In another alternative, the selected solid polymeric material together with selected exothermic metallic material may be introduced as a "trim" material to the B.O.P. vessel after the initial oxygen injection cycle is completed. If for instance, at points during the normal oxygen injection cycle, it has been determined that the heat of steel is below the desired tapping temperature it is possible to add polymeric fuels together with selected exothermic metallic material and re-blow to gain additional metal temperature without disturbing the desired end carbon content. A re-blow without sufficient supplemental fuel generally depletes the carbon content of the steel to a level below specification. Polymeric fuel together with selected exothermic metallic material has also been used to re-blow a heat that has been forced for mechanical reasons to remain in the vessel for an extended time period. Heats have been tapped within specification that have had a sitting residence time of up to one hour, forty-five minutes from the interruption of oxygen injection to resumption of oxygen injection. The polymeric fuel together with selected exothermic metallic material is introduced to gain re-ignition and provide additional thermal input to the vessel.

As another alternative, solid polymeric fuel materials together with selected exothermic metallic material in particulate form may be conveniently introduced into the bottom of a steel making vessel which is bottom-stirred with an inert gas stream. In this latter embodiment, the polymeric material together with selected exothermic metallic material may be conveniently ground into about one eighth inch by down dimensions prior to introduction, and energy advantages may be realized because the polymeric fuel together with selected exothermic metal containing material releases its heat content deep within the vessel instead of the upper surface thereof. Accordingly, the present invention provides the flexibility for introduction from all available entry points of the vessel, and at all times during normal and abnormal refining cycles.

When utilized as a solid fuel, the polymeric material is selected to be exothermic within the furnace environment. Residence time of the selected solid polymeric material may be conveniently controlled by introducing diluents, buffers or reaction-delaying materials therein, and/or by controlling the physical dimension of the units of the material introduced.

0187008

Preferably the polymeric material is selected to have in excess of ten repeating carbon units in its structures, and may generally have a chemical composition as follows:

$$- [C H_x O_y N_z]_n -$$

where
$$0.25 < x < 4.0$$
$$0.0 < y < 3.0 \text{ and}$$
$$0.0 < z < 2.0.$$

In applications where there exist environmental concerns associated with stack emissions, the polymeric material is preferably selected to include a sulfur content of less than 0.01 weight percent, and more preferably less than about 0.001 weight percent. Phosphorus, halogen and heavy metal content is also preferably maintained within the same weight percent range.

In applications where the solid polymeric material is to function principally as a fuel source, the polymeric material of the present invention is preferably selected to have a hydrogen content greater than about 4 weight percent and more preferably between about 10 weight percent and 14 weight percent.

Buffering material of agents used in connection with the practice of the subject invention include, but are not limited to, lime, calcium carbonate, dolomite, burnt dolomite, fluorspar and mixtures thereof. Best results may be obtained when the buffering material is calcium carbonate.

The following examples will illustrate specific embodiments of the invention primarily in use as a polymeric solid fuel system.

0187008

## PRIOR ART

Polyethylene and quicklime were combined and formed into solid pucks by extrusion and fabrication techniques discussed more fully herebelow. The solid pucks were 60 percent polyethylene and 40 percent quicklime by weight, with each puck having a weight of about 0.5 pound. The polyethylene was selected to function as a supplemental solid fuel source in the steel making process, with quicklime being added to control the residence time of the polyethylene in the furnace environment. Solid fuel pucks were introduced into the furnace with the flux charge shortly after the initiation of the oxygen injection cycle. It was determined that for each 350-400 pounds of solid fuel pucks introduced, a substitution of between 6000 and 9000 pounds of scrap metal for hot metal could be achieved, with the resultant steel remaining within the specification for residual carbon, sulfur and iron oxide content.

## Example of the Invention

Polyethylene, magnesium ferrosilicon and calcium carbonate were combined and formed into solid fifty pound cubes by extrusion and fabrication techniques discussed more fully herebelow. The solid pucks (cubes) were 84% percent polyethylene, 10% percent magnesium ferrosilicon and 6% percent calcium carbonate by weight, with each cube having a weight of 50 pounds. The polyethylene and magnesium ferrosilicon were selected to function as a supplemental solid fuel source in the steel making process, with calcium carbonate being added to control the residence time of the polyethylene in the furnace environment. Solid fuel blocks were introduced into the furnace through the "alloy" chute, immediately after the hot metal charge, and immediately prior to injection and ignition. It was determined that for each 200 pounds of solid fuel blocks introduced, a substitution of 6000 pounds of scrap metal for hot metal could be achieved, with the resultant steel remaining within specification for residual carbon, sulfur and iron oxide content.

By comparison, as noted above, about 2400 pounds of supplemental anthracite coal is required for each 4000 to 6000 pounds of scrap metal substitution, and greater levels of substitution cannot be achieved because of sulfur limitations, and the high levels of CO gas generated during the initial oxygen injection.

The ratio between the fuel used and the replacement of hot metal is referred to as the "replacement ratio". With coal the replacement ratio is about 2.5-3.0 to 1; with polymer as described above, it is about 18 to 1; whereas with the material of the invention it is about 30 to 1. (The foregoing is based on use in an open hood type of basic oxygen furnace.)

In addition, with the prior art utilizing polymer/buffer only, the standard ratio is 400 pounds of fuel to 8000 pounds of hot metal replacement.

Thus, use of the above described embodiment of the invention increased the amount of scrap metal which could be charged, and did so at least 10 times as effectively, per pound, as anthracite coal and 1.66 times as effectively as polyethylene and buffer, without limitation due to sulfur content or carbon removal.

The solid fuel blocks referred to in the Example of the Invention were formed of a uniform mixture comprising 84% of low density polyethylene

0187008

having a melt index of between about 16 and 22, 10% of particulate magnesium ferrosilicon material having an average particle size of 8 to 20 mesh, and 6% of calcium carbonate having an average particle size of about 4 microns. The mixture was produced by weighing the ingredients into a stainless steel drum and tumbling the drum on a drum tumbler for about twenty minutes. The mixture was extruded into a cylindrical, columnar extrudate of about a three inch diameter at a temperature of about 475 degrees Fahrenheit. The extrudate column is cast into a cardboard box approximately 12"x12"x12". Each box is weighed for net weight which is 50 pounds. The filled boxes are then closed, cooled and stacked onto pallets of various total weights.

The following table sets forth a series of tests wherein the material of the instant invention was utilized to reduce the amount of hot metal required in a heat of steel produced by the basic oxygen process.

|  | LBS MATERIAL OF INVENTION/LBS HOT |  |  |  |  |  |  |  |  |
|---|---|---|---|---|---|---|---|---|---|
| HT.# | METAL CUT | RATIO | AIM TEMP | T.D.TEMP | AIM C. | T.D."C" | O.K./TAP | REBLOWS | MELTER COMMENT |
| 953237 | 150/4000 | 26/1 | 2890 | 2875 | 06 | 052 | NO | 35 sec T | GOOD |
| 943730 | 200/4000 | 20/1 | 2900 | 2950 | 06 | 065 | YES | – | OFF |
| 943731 | 200/6000 | 30/1 | 2900 | 2915 | 06 | 062 | YES | – | GOOD |
| 953239 | 200/6000 | 30/1 | 2880 | 2875 | 05 | 067 | NO | T & C | GOOD |
| 943732 | 200/6000 | 30/1 | 2890 | 2925 | 07 | 052 | YES | – | GOOD |
| 943733 | 200/6000 | 30/1 | 2880 | 2885 | 09 | 084 | NO | ? | OFF |
| 943734 | 200/6000 | 30/1 | 2890 | 2950 | 06 | 062 | NO | COOLED | GOOD |
| 953240 | 200/6000 | 30/1 | 2920 | 2880 | 08 | 059 | NO | 20 sec T | GOOD |
| 953241 | 200/6000 | 30/1 | 2880 | 2875 | 06 | 086 | NO | 25 sec C | GOOD |
| 943735 | 200/6000 | 30/1 | 2900 | 2935 | 07 | 09 | YES | – | GOOD |
| 953242 | 200/6000 | 30/1 | 2870 | 2890 | 04 | 046 | NO | SULPHUR | GOOD |

-16-

0187008

While there have been described herein what are at present considered to be the preferred embodiments of this invention, it will be apparent to those skilled in the art that various changes and modifications may be made therein without departing from the invention, and it is intended in the appended claims to cover all such changes and modifications as fall within the true spirit and scope of the invention.

-17-

## CLAIMS

1. A method of producing a heat of steel, in which a steel making furnace is charged with a first quantity of scrap metal and a second quantity of hot metal, characterised by introducing into said steel making furnace (i) a selected quantity of a polymeric material having a sulfur content less than about 0.1 percent by weight, and (ii) an effective amount of metallic material which reacts exothermically with oxygen to thereby reduce the quantity of hot metal required to produce a heat of steel in the absence of the metal-containing material.

2. A method according to claim 1, wherein said polymeric material comprises polyethylene, polypropylene, polystyrene, polyester, polyamides, polycarbonate, phenolics, polyacrylonitrile, poly-1,3-butadiene, poly-m-divinylbenzene, poly-1-hexene, polyindene, polyisobutylene, polyisoprene, poly-1-pentene, polyvinyl acetate, polyvinylcyclohexene, polymaleic anhydride, polymethacrylic acid, polyvinyl n-butyrate, polyvinylene carbonate, polyvinyl formate and melamines.

3. A method according to claim 1, wherein said polymeric material comprises polypropylene.

4. A method according to claim 1, 2 or 3, wherein said metallic material has a heat of oxidation greater than iron.

5. A method according to any of claims 1 to 4, wherein said metallic material is at least one material selected from the group consisting of aluminium, silicon, magnesium, titanium, vanadium, rare earths, calcium, sodium, columbium, and compounds thereof.

6. A method according to claim 5, wherein said metallic material comprises magnesium ferrosilicon.

7.  A method according to any preceding claim, wherein said polymeric material and said metallic material are combined with each other into a solidified mass prior to being introduced into the steel-making furnace.

8.  A method according to any preceding claim, wherein said polymeric material has a sulfur content less than 0.01 percent, by weight.

9.  A composition of matter adapted for use in reducing the amount of hot metal required in producing steel by the basic oxygen process which comprises an effective amount of:

(i) a polymeric material having a sulfur content less than about 0.1 percent by weight, and

(ii) an effective amount of metallic material which reacts exothermically with oxygen to thereby reduce the quantity of hot metal required to produce a heat of steel in the absence of the metal-containing material.

10.  A composition according to claim 9, wherein said polymeric material comprises polyethylene, polypropylene, polystyrene, polyester, polyamides, polycarbonate, phenolics, polyacrylonitrile, poly-1,3-butadiene, poly-m-divinylbenzene, poly-1-hexene, polyindene, polyisobutylene, polyisoprene, poly-1-pentene, polyvinyl acetate, polyvinylcyclo-hexene, polymaleic anhydride, polymethacrylic acid, polyvinyl n-butyrate, polyvinylene carbonate, polyvinyl formate and melamines.

11.  A composition according to claim 9, wherein said polymeric material comprises polypropylene.

12.  A composition according to claim 9, 10 or 11, wherein said metallic material has a heat of oxidation greater than iron.

13. A composition according to any of claims 9 to 12, wherein said metallic material is at least one material selected from the group consisting of aluminium, silicon, magnesium, titanium, vanadium, rare earths, calcium, sodium, columbium, and compounds thereof.

14. A composition according to any of claims 9 to 12, wherein said metallic material comprises magnesium ferrosilicon.

15. A composition according to any of claims 9 to 14, wherein said polymeric material and said metallic material are combined with each other into a solidified mass.

16. A composition according to any of claims 9 to 15, wherein said polymeric material has a sulfur content less than 0.01 percent by weight.

17. A method according to claim 1, in which the polymeric material comprises a polyester.

18. A method according to claim 1, in which the polymeric material has the chemical composition $-[C H_x O_y N_z]_n-$

19. A method according to claim 18, in which $n > 10$.

20. A method according to claim 18 or 19, in which the hydrogen content is greater than 4 percent, by weight.

21. A method according to claim 18, 19 or 20, in which $o < y < 3$ and $o < z < 2$.

22. A composition according to claim 9, in which the polymeric material comprises a polyester.

23. A composition according to claim 9, in which the polymeric material has the chemical composition $-[C H_x O_y N_z]_n-$

24. A composition according to claim 23, in which $n > 10$.

25.  A composition according to claim 23 or 24, in which the hydrogen content is greater than 4 percent, by weight.

26.  A method according to claim 23, 24 or 25, in which $0 < y < 3$ and $0 < z < 2$.

. . . . . . . . . . . . . . . . . . . . . . . . . . . . . . . . . . . . . . . . . . . . . . .